# EUROPÄISCHE PATENTSCHRIFT

(11) **EP 0 372 241 B1**
(45) Veröffentlichungstag und Bekanntmachung des Hinweises auf die Patenterteilung: **22.09.1993**
(21) Anmeldenummer: 89120633.6
(22) Anmeldetag: 07.11.1989
(51) Int. Cl.: G01B 11/30, G01N 21/88

(54) **Optikanordnung zur dreidimensionalen Formerfassung**
Optical device for three-dimensional form sensing
Dispositif optique pour déterminer une forme tridimensionnelle

(30) Priorität: 17.11.1988 DE 3838954
(43) Veröffentlichungstag der Anmeldung: 13.06.1990
(73) Patentinhaber: SIEMENS AKTIENGESELLSCHAFT, 80333 München (DE)
(72) Erfinder: Marguerre, Hans-Helmut, Dipl.-Phys., D-7541 Straubenhardt 2 (DE)

(56) Entgegenhaltungen:
- EP-A- 0 169 444
- EP-A- 0 198 557
- WO-A-86/05588
- FR-A- 2 193 975
- US-A- 4 310 242

## Beschreibung

### Technisches Gebiet

Die Erfindung betrifft eine Optikanordnung zur dreidimensionalen Formerfassung, beispielsweise für die industrielle Sichtkontrolle von Prüfobjekten (Formteilen) mit Oberflächen aus Metall, Glas, Kunststoff, Email oder Lack, gemäß den Merkmalen des Oberbegriffs des Anspruchs 1.

### Stand der Technik

Bei einer bekannten Anordnung dieser Art (DE-OS 34 06 066) zur optischen Erfassung räumlicher Unebenheiten ist die Oberfläche des zu untersuchenden reflektierenden bzw. durchleuchtbaren Objekts mit Lichtstrahlen unter einem vorgegebenen Winkel beleuchtet. Die vom Objekt reflektierten bzw. durchgelassenen Lichtstrahlen werden von einem Retroreflektor und wiederum von der Oberfläche bzw. durch sie hindurch in das Objektiv einer Videokamera reflektiert. Aufgrund der starken Winkelabhängigkeit der Intensität der Reflexion am Retroreflektor ergeben sich starke Änderungen der Lichtstrahlenauffächerung in der Kamera bei Unebenheiten am Objekt, wodurch diese leicht detektiert werden können.

### Darstellung der Erfindung

Der Erfindung liegt die Aufgabe zugrunde, eine Optikanordnung zur optischen Erfassung dreidimensionaler Formen zu schaffen, bei der die Erkennung bzw. Kontrastierung auch von kleineren Unebenheiten mit einfachen Mitteln sicher durchführbar ist.

Zur Lösung dieser Aufgabe weist eine Optikanordnung der eingangs angegebenen Art die Merkmale des Kennzeichens des Anspruchs 1 auf.

Wesentliche Vorteile der erfindungsgemäßen Optikanordnung ergeben sich aus der Verwendung von Projektionssystemen und von Feldlinsen. Die Bezeichnung Feldlinse soll darauf hinweisen, daß diese Linsen dem Bildaufnahmefeld zugeordnet sind. Die Feldlinsen haben die Aufgabe, einerseits das von der Kondensoroptik im Projektionsobjektiv entworfene Lichtquellenbild auf den Retroreflektor und in die Blendenöffnung des Kameraobjektives abzubilden und andererseits das Bildaufnahmefeld gleichmäßig auszuleuchten. Dadurch ergeben sich in vorteilhafter Weise insbesondere ein konstanter Abbildungsmaßstab, eine weitgehende Entzerrung des Bildfeldes, eine gute Abbildung von Oberflächenprofilen und die verbesserte Kontrastierung von Oberflächenfehlern und Formabweichungen.

### Kurze Beschreibung der Zeichnung

Die Erfindung wird anhand der Figuren erläutert, wobei
Figur 1 ein erstes Ausführungsbeispiel einer Optikanordnung mit Retroreflektor und Feldlinse und
Figur 2 ein zweites Ausführungsbeispiel darstellt.

### Wege zur Ausführung der Erfindung

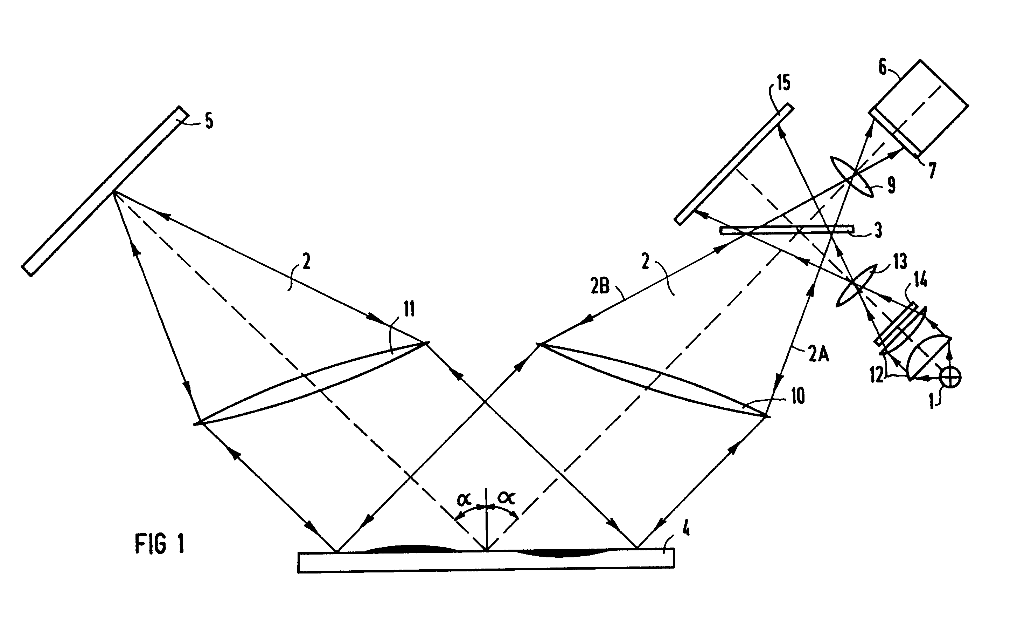

Bei der in der Figur 1 dargestellten Optikanordnung werden die Lichtstrahlen 2 einer Lichtquelle 1 von einem halbdurchlässigen Spiegel 3 auf die Oberfläche 4 eines zu untersuchenden Objekts reflektiert. Der Einfallswinkel der Lichtstrahlen 2 ist im dargestellten Fall mit α gekennzeichnet, wobei bei einer ebenen Oberfläche der Winkel der von der Oberfläche reflektierten Lichtstrahlen ebenfalls gleich α ist. An einem Retroreflektor 5 werden die Lichtstrahlen 2 derart reflektiert, daß sie parallel zu den ankommenden Strahlen zur Oberfläche 4 zurückgeworfen und von der Oberfläche 4 durch den halbdurchlässigen Spiegel 3 von einer Videokamera 6 erfaßt werden. In der Videokamera 6 wird somit das Bild der Oberfläche 4 in der Bildebene 7 abgebildet.

Im Strahlengang der Lichtstrahlen 2 im Bereich zwischen den Strahlen 2A und 2B sind Feldlinsen 10 und 11 angeordnet, und zwischen der Lichtquelle 1 und dem halbdurchlässigen Spiegel 3 befindet sich eine Kondensoroptik 12 und eine Projektionsoptik 13, die eine Projektionsebene 14 aufweist. Auf der gegenüberliegenden Seite des halbdurchlässigen Spiegels 3 ist eine Lichtfalle 15 angeordnet.

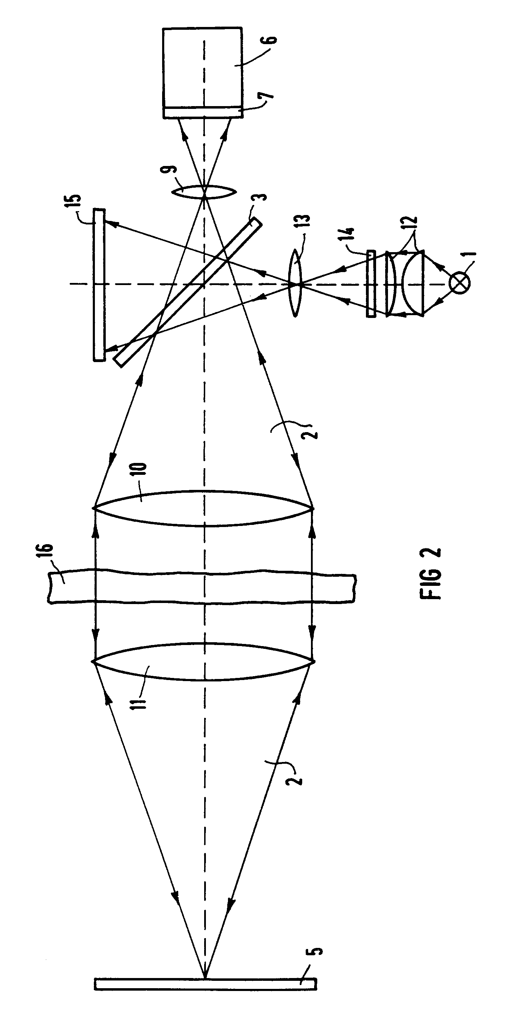

Bei dem in der Figur 2 dargestellten Ausführungsbeispiel der Optikanordnung zur Erfassung räumlicher Unebenheiten dient als zu untersuchendes Objekt eine transparente Folie 16, die hier von den Lichtstrahlen 2 der Lichtquelle 1 durch den halbdurchlässigen Spiegel 3 hindurch angeleuchtet wird. Die durch das Objekt 10 hindurchtretenden Lichtstrahlen werden hier ebenso wie bei der Anordnung nach der Figur 1 am Retroreflektor 5 parallel reflektiert und erneut durch den halbdurchlässigen Spiegel 3 im Objektiv 9 der Videokamera 6 erfaßt.

Auch hier sind, wie im Ausführungsbeispiel nach der Figur 1, Feldlinsen 10, 11 und eine Kondensor- und Projektionsoptik 12, 13, 14 sowie eine Lichtfalle 15 angeordnet.

In den Optikanordnungen nach Figur 1 und 2 kann mit Hilfe der Feldlinsen 10, 11 ein paralleler Strahlenverlauf der Lichtstrahlen 2 eingestellt werden. Abstandsänderungen des Prüfobjektes innerhalb des Bereiches der Feldlinsen 10, 11 ändern daher nicht den Abbildungsmaßstab.

Durch die schräge Betrachtung (z. B. unter 45°) der Oberfläche 4 (Figur 1) entstehen trapezförmige Bildverzerrungen, die mit den Feldlinsen 10, 11 und einem parallelen Strahlengang reduziert werden, wobei jedoch eine geringe Verzerrung bestehen bleibt, da die Lichtstrahlen 2A und 2B (Figur 1) unterschiedliche Weglängen haben. Vollständig eliminieren lassen sich die Verzerrungen durch einen konvergenten Strahlenverlauf zwischen den Feldlinsen 10, 11 und dem Prüfobjekt.

Das bisher angewandte Kontrastierungsverfahren im Hellfeld, d. h., die im Idealfall punktförmige Lichtquelle 1 wird in das Zentrum der Kameraobjektiv-Öffnung 9 abgebildet, ist gut geeignet, um normale Formabweichungen und Oberflächenfehler sichtbar zu machen. Bei Welligkeiten besteht jedoch in 1. Näherung ein quadratischer Zusammenhang zwischen dem Oberflächenprofil der Oberfläche 4 und der Helligkeitsverteilung im erfaßten Bild. Einen vorteilhaften linearen Zusammenhang kann dagegen die Dunkelfeldbeleuchtung liefern. Die Optikanordnung muß hierfür z. B. so eingestellt werden, daß ein Lichtquellenbild dicht neben der Kameraobjektiv-Öffnung 9 entsteht. Eine ebene oder leicht gekrümmte Oberfläche wird dann dunkel wiedergegeben, während Formabweichungen und Fehler hell im Bild erscheinen. Welligkeiten lassen sich bei Dunkelfeldbeleuchtung somit leichter vermessen, weil sie eine dem Höhenprofil entsprechende Helligkeitsverteilung im Bild hervorrufen. So liefert beispielsweise ein sinusförmiges Profil der Oberfläche 4 einen sinusförmigen Helligkeitsverlauf mit Phasenversatz. Die genannte Dunkelfeldbeleuchtung mit außeraxialem Lichtquellenbild liefert einen Welligkeitskontrast nur in einer Dimension. Die Kontrastierung von Welligkeiten in zwei Dimensionen ist dagegen mit einer Farbcodierung möglich. Hierzu sind drei verschiedenfarbige, im Dreieck angeordnete Lichtquellen 1 (z. B. mit roter, grüner und blauer Farbe) oder ein Ringlicht mit kreisförmigem Farbverlaufsfilter erforderlich. Zur Bildaufnahme wird eine Farbvideokamera 6 benötigt. Die Richtung der Welligkeiten im Bildfeld der Kamera 6 kann dann aus der Farbinformation gewonnen werden.

Die Hellfeldbeleuchtung kontrastiert - wie beschrieben - gleichzeitig Oberflächenfehler, Formabweichungen und Welligkeiten. Der Welligkeitskontrast kann jedoch die Bildverarbeitung für Fehler- und Formabweichungen erschweren oder sogar unmöglich machen. Eine Lösung dieses Problems kann daher die Dunkelfeldbeleuchtung liefern, da diese ein Schwellwertverhalten zeigt. Für das obengenannte Beispiel der außeraxialen Punktlichtquelle 1 ist der Schwellwert durch den Abstand des Lichtquellenbildes zum Zentrum der Kameraobjektiv-Öffnung 9 vorwählbar. Bei zunehmendem Abstand (z. B. durch seitliche Verschiebung der Lichtquelle 1) verschwinden zunächst die Bildkontraste von schwächer ausgeprägten Welligkeiten und Formabweichungen und später erst von den stärker ausgeprägten Formabweichungen.

Ein linearer Zusammenhang zwischen Oberflächenprofil der Oberfläche 4 und dem Helligkeitsverlauf im Bild ist bei der Fehlererkennung nicht erforderlich. Daher besteht hier weitgehende Wahlfreiheit der Form und Position der Lichtquelle 1 sowie der Transmissionsfunktion des Kameraobjektivs 9. Damit ist es möglich, für die jeweilige Erkennungsaufgabe einen optimalen Bildkontrast zu erzeugen. Beispiele für Beleuchtungsvarianten sind:
- ein oder mehrere um die Kameraobjektiv-Öffnung 9 angeordnete punktförmige Lichtquellenbilder;
- ein Ringlichtquellenbild konzentrisch um die Kameraobjektiv-Öffnung 9;
- ein punktförmiges Lichtquellenbild, das auf einer zusätzlichen Zentralblende im Kameraobjektiv 9 entworfen wird;
- eine linienförmige Lichtquelle 1, die dicht neben eine Schlitzblende im Kameraobjektiv 9 abgebildet wird.

Außerdem besteht die Möglichkeit zur stetigen Kontrastvariation bzw. Vorwahl. Hierfür kann in den Optikanordnungen nach Figur 1 und 2 direkt vor dem Retroreflektor 5 eine Linse oder ein Objektiv eingeführt werden. Das Lichtquellenbild muß dann in der Blendenöffnung dieses - hier nicht dargestellten - Objektivs entworfen werden. Solange sich der Retroreflektor dicht hinter der Linse (bzw. dem Objektiv) befindet, hat das Bild maximalen Kontrast. Bei Verschiebung und stetiger Entfernungszunahme des Retroreflektors 5 zu dieser Linse (bzw. diesem Objektiv) geht der Bildkontrast stetig zurück. Er wird minimal (nahezu Null), wenn die zusätzliche Optik die Oberfläche scharf auf den Retroreflektor 5 abbildet.

Die Kontrastwirkung der Optikanordnungen mit oder ohne Feldlinsen 10, 11 kommt durch das nichtideale Verhalten des Retroreflektors 5 zustande. Die üblicherweise verwendete Retroreflexfolie mit Glaskügelchen reflektiert ein einfallendes fadenförmiges Lichtstrahlenbündel innerhalb eines Auffächerungswinkels von typisch 1° bis 2°, wobei gleichzeitig Reflexionsverluste auftreten. Nachteilig für den Bildkontrast ist außerdem das stetige Abklingen der Lichtreflexion innerhalb dieses Auffächerungswinkels. Die Voraussetzungen für einen höheren Bildkontrast und für verbesserte Meßmöglichkeiten von Oberflächenprofilen sind dann gegeben, wenn das Licht vom Retroreflektor 5 nur in einem definierten Winkel oder Winkelbereich reflektiert wird. Beispiele hierfür sind:
- Die Lichtstrahlen 2 werden nur in eine bestimmte Richtung abgelenkt, wobei der einfallende und reflektierte Lichtstrahl einen definierten Winkel einschließt. Damit ergibt sich ein richtungsabhängiger Bildkontrast.
- Ein fadenförmiges Lichtstrahlenbündel wird kreisförmig aufgefächert, wobei alle einfallenden und reflektierten Lichtstrahlen nur einen definierten Winkel einschließen.

Retroreflektoren 5 mit derartigen Eigenschaften lassen sich mit Hologrammen realisieren. Diese können hergestellt werden:
- durch Hologrammaufnahme von Retroreflektoren 5, wobei die gewünschten Reflexionsbereiche herausgefiltert werden müssen;
- durch computergenerierte Hologramme mit definierten Reflexionseigenschaften.

Die Hologramme müßten einen hohen Wirkungsgrad haben, wie er z. B. bei Prägehologrammen (embossed relief holograms) erreicht wird.

Ein ebenfalls anwendbarer aktiver Retroreflektor 5 speichert im ersten Schritt die Informationen über die Helligkeitsverteilung und die Richtungen der auf ihn treffenden Lichtstrahlen. Im zweiten Schritt wird die Lichtquelle abgeschaltet, und der aktive Retroreflektor 5 beleuchtet nur noch das Prüfobjekt, wobei die vorher gespeicherten Helligkeits- und Richtungsinformationen entweder exakt reproduziert oder in definierter Weise verändert werden. Hierzu ist an der Stelle des Retroreflektors 5 ein Medium zur Aufnahme und Wiedergabe dreidimensionaler Bildinformationen erforderlich. Beispiele hierfür sind:
- Linsenraster, welche dreidimensionale Bildinformationen in zweidimensionale Bilder umsetzen. Das Prinzip wird in ähnlicher Weise bei dreidimensionalen Fotografien angewandt.
- Löschbare Speichermedien, wie thermoplastische Filme oder optoelektronische Lichtmodulatoren zur Aufnahme, Wiedergabe und anschließenden Löschung von Hologrammen. Als Lichtquelle ist hierzu ein Laser erforderlich. Vom aufgeweiteten Laserstrahl muß außerdem eine Referenzwelle zur Hologrammaufnahme ausgespiegelt werden.

Ein solcher aktiver Retroreflektor 5 hat den Vorteil, daß das direkt vom Prüfobjekt zum Bildaufnahmesensor reflektierte, kontrastmindernde Licht eliminiert wird.

Zum Formvergleich und zur formangepaßten Beleuchtung wird ein fehlerfreies Prüfobjekt bzw. Vergleichsobjekt in einer Optikanordnung nach Figur 1 (oder Figur 2) beleuchtet und das vom Retroreflektor 5 zurückgeworfene Licht über einen halbdurchlässigen Spiegel ausgeblendet und auf das zu prüfende Objekt gelenkt. Der Bildaufnahmesensor (Videokamera 6) erfaßt unter einem entsprechenden Reflexionswinkel die Formdifferenzen zwischen Prüfobjekt und Vergleichsobjekt. Für diese Anwendung ist es vorteilhaft, wenn der Retroreflektor 5 eine ideale Reflexion (ohne Strahlauffächerung) hat. Ein Formvergleich ist auch möglich mit Hilfe eines Hologramms, das vom Vergleichsobjekt in der Retroreflektorebene aufgenommen wurde. Das Hologramm dient dann zusammen mit einem Laser zur Beleuchtung des Prüfobjektes.

Durch ein verspiegeltes Vergleichsobjekt in der Optikanordnung mit Retroreflektor 5 oder einem davon hergestellten Hologramm kann ein Prüfobjekt mit gleicher Form gleichmäßig ausgeleuchtet werden. Bei dieser formangepaßten Beleuchtung erscheint das Prüfobjekt mit gleichmäßiger Helligkeit, sofern keine Reflexionsunterschiede zum Vergleichsobjekt bestehen.

Ein Formvergleich ist auch mit einem auf das Vergleichsobjekt projizierten Raster möglich. Dabei ist es erforderlich, das Vergleichsobjekt auf den Retroreflektor scharf abzubilden. Im Vergleich zu bekannten Verfahren der Rasterprojektion oder Rasterspiegelung kann hier eine wesentlich vereinfachte Bildverarbeitung erwartet werden, weil sich die Rasterlinien bei übereinstimmung von Vergleichsobjekt und Prüfobjekt nicht verformen. Nur bei Formabweichungen ergibt sich ein entsprechend veränderter Rasterlinienverlauf.

### Gewerbliche Anwendbarkeit

Die Optikanordnungen können eingesetzt werden entweder als Sehhilfe für den Prüfer bei Oberflächenprüfungen in der Automobilindustrie oder als Kontrastierungseinrichtungen für die automatische Bilddatenverarbeitung. Weitere Anwendungsmöglichkeiten der geschilderten Optikprinzipien bestehen in der Mikroskopie sowohl für Auflicht- als auch Durchlichtobjekte.

## Patentansprüche

1. Optikanordnung zur dreidimensionalen Formerfassung in der Struktur eines zu untersuchenden Objekts, bei der
- das Objekt von einer Lichtquelle (1) in einem vorgegebenen Winkel beleuchtet ist,
- eine Videokamera (6) mit nachgeschalteter elektronischer Auswerteeinrichtung vorhanden ist, mit der die vom Objekt beeinflußten Lichtstrahlen (2) der Lichtquelle (1) erfaß- und auswertbar sind,
- zwischen der Videokamera (6) und dem Objekt ein halbdurchlässiger Spiegel (3) angeordnet ist, der die Lichtstrahlen (2) der Lichtquelle (1) zum Objekt reflektiert und die vom Objekt kommenden Lichtstrahlen (2) zur Videokamera (6) durchläßt, und
- ein Retroreflektor (5) vorhanden ist, der im Strahlengang der Lichtstrahlen (2) derart angeordnet ist, daß
- bei der Untersuchung einer reflektierenden Oberfläche (4) des Objekts die Lichtstrahlen (2) der Lichtquelle (1) von der Oberfläche (4) zum Retroreflektor (5) und von diesem zurück zur Oberfläche und von dort zur Videokamera (6) reflektiert werden,
**dadurch gekennzeichnet,** daß
- im Strahlengang der Lichtstrahlen (2) jeweils eine Feldlinse (10) zwischen der Lichtquelle (1) und der reflektierenden Oberfläche (4) und eine Feldlinse (11) zwischen der reflektierenden Oberfläche (4) und dem Retroreflektor (5) so angeordnet sind, daß ein paralleler Strahlenverlauf der Lichtstrahlen (2) im Bereich der Oberfläche (4) eingestellt wird,
- der Lichtquelle (1) eine Kondensoroptik (12) und eine Projektionsoptik (13, 14) nachgeschaltet und
- auf der der Lichtquelle (1) gegenüberliegenden Seite des halbdurchlässigen Spiegels (3) eine Lichtfalle (15) angeordnet ist.

2. Optikanordnung zur dreidimensionalen Formerfassung in der Struktur eines zu untersuchenden Objekts, bei der
- das Objekt von einer Lichtquelle (1) mit einem vorgegebenen Winkel beleuchtet ist,
- eine Videokamera (6) mit nachgeschalteter elektronischer Auswerteeinrichtung vorhanden ist, mit der die vom Objekt beeinflußten Lichtstrahlen (2) der Lichtquelle (1) erfaß- und auswertbar sind,
- zwischen der Videokamera (6) und dem Objekt ein halbdurchlässiger Spiegel (3) angeordnet ist, der die Lichtstrahlen (2) der Lichtquelle (1) zum Objekt reflektiert und die vom Objekt kommenden Lichtstrahlen (2) zur Videokamera (6) durchläßt, und
- ein Retroreflektor (5) vorhanden ist, der im Strahlengang der Lichtstrahlen (2) derart angeordnet ist, daß
- bei der Untersuchung eines transparenten Objekts (16) die Lichtstrahlen (2) durch das Objekt (16) zum Retroreflektor (5) und von diesem durch das Objekt (16) zurück zur Videokamera (6) geführt werden,
**dadurch gekennzeichnet,** daß
- im Strahlengang der Lichtstrahlen (2) jeweils eine Feldlinse (10) zwischen der Lichtquelle (1) und dem Objekt (16) und eine Feldlinse (11) zwischen dem Objekt (16) und dem Retroreflektor (5) so angeordnet sind, daß ein paralleler Strahlenverlauf der Lichtstrahlen (2) im Bereich des Objekts (16) eingestellt wird,
- der Lichtquelle (1) eine Kondensoroptik (12) und eine Projektionsoptik (13, 14) nachgeschaltet und
- auf der der Lichtquelle (1) gegenüberliegenden Seite des halbdurchlässigen Spiegels (3) eine Lichtfalle (15) angeordnet ist.

3. Optikanordnung nach Anspruch 1 oder 2, **dadurch gekennzeichnet,** daß
- vor dem Retroreflektor (5) ein Objektiv zur Kontrastvariation durch Verschiebung des Retroreflektors (5) angeordnet ist.

4. Optikanordnung nach einem der vorhergehenden Ansprüche, **dadurch gekennzeichnet,** daß
- der Retroreflektor (5) ein Hologramm mit definierten Reflexionseigenschaften ist.

5. Optikanordnung nach Anspruch 4, **dadurch gekennzeichnet,** daß
- die Lichtquelle (1) ein Laser mit aufgeweitetem Lichtstrahl ist.

6. Optikanordnung nach Anspruch 4 oder 5, **dadurch gekennzeichnet,** daß
- die Reflexionseigenschaften des Hologramms als Retroreflektor (5) jeweils aktiv für die zu erfassende Oberfläche (4) durch Herausfiltern der erforderlichen Reflexionsbereiche bzw. durch computergestützte Generierung beeinflußt werden.

7. Optikanordnung nach einem der vorhergehenden Ansprüche, **dadurch gekennzeichnet,** daß
- ein Formvergleich zwischen einem fehlerfreien Vergleichsobjekt und der zu erfassenden Oberfläche (4) durchgeführt wird, indem beide Objekte beleuchtet werden und das vom Retroreflektor (5) zurückgeworfene Licht über einen halbdurchlässigen Spiegel ausgeblendet und auf das zu prüfende Objekt gelenkt wird.

8. Optikanordnung nach Anspruch 7, **dadurch gekennzeichnet,** daß
- das fehlerfreie Vergleichsobjekt verspiegelt ist oder durch ein hieraus hergestelltes Hologramm ersetzt wird und zur formangepaßten Beleuchtung der zu erfassenden Oberfläche (4) dient.

9. Optikanordnung nach einem der vorhergehenden Ansprüche, **dadurch gekennzeichnet,** daß
- die Lichtquelle (1) aus Einzellichtquellen von verschiedener Farbigkeit aufgebaut ist und die Videokamera (6) eine Farbvideokamera ist.

## Claims

1. Optical arrangement for three-dimensional form-sensing in the structure of an object to be examined, in which
- the object is illuminated from a light source (1) at a predetermined angle
- there is a video camera (6) with a subsequently connected electronic evaluation device with which the light rays (2) of the light source (1), which are affected by the object, can be sensed and evaluated
- between the video camera (6) and the object there is arranged a half-silvered mirror (3) which reflects the light rays (2) of the light source (1) to the object and lets through to the video camera (6) the light rays (2) coming from the object, and
- there is a retro-reflector (5) which is arranged in the ray path of the light rays (2) in such a way that
- when examining a reflecting surface (4) of the object the light rays (2) of the light source (1) are reflected from the surface (4) to the retro-reflector (5) and from this back to the surface and from there to the video camera (6),
characterised in that
- in the ray path of the light rays (2) there are respectively arranged a field lens (10) between the light source (1) and the reflecting surface (4), and a field lens (11) between the reflecting surface (4) and the retro-reflector in such a way as to give rise to a parallel ray path of the light rays (2) in the region of the surface (4),
- a condenser optical system (12) and a projection optical system (13, 14) are connected to the output of the light source (1) and
- on the side of the half-silvered mirror (3) opposite the light source (1) there is arranged a light trap (15).

2. Optical arrangement for three-dimensional form-sensing in the structure of an object to be examined, in which
- the object is illuminated from a light source (1) at a predetermined angle
- there is a video camera (6) with a subsequently connected electronic evaluation device with which the light rays (2) of the light source (1), which are affected by the object, can be sensed and evaluated
- between the video camera (6) and the object there is arranged a half-silvered mirror (3) which reflects the light rays (2) of the light source (1) to the object and lets through to the video camera (6) the light rays (2) coming from the object, and
- there is a retro-reflector (5) which is arranged in the ray path of the light rays (2) in such a way that
- when examining a transparent object (16) the light rays (2) are guided through the object (16) to the retro-reflector (5) and from this through the object (16) back to the video camera (6),
characterised in that
- in the ray path of the light rays (2) there are respectively arranged a field lens (10) between the light source (1) and the object (16), and a field lens (11) between the object (16) and the retro-reflector (5) in such a way as to give rise to a parallel ray path of the light rays (2) in the region of the object (16)
- a condensor optical system (12) and a projection optical system (13, 14) are connected to the output of the light source (1) and
- on the side of the half-silvered mirror (3) opposite the light source (1) there is arranged a light trap (15).

3. Optical arrangement according to claim 1 or 2, characterised in that
- in front of the retro-reflector (5) there is arranged a lens for contrast variation by shifting the retro-reflector (5).

4. Optical arrangement according to one of the preceding claims, characterised in that
- the retro-reflector (5) is a hologram with defined reflection properties.

5. Optical arrangement according to claim 4, characterised in that
- the light source (1) is a laser with a widened light beam.

6. Optical arrangement according to claim 4 or 5, characterised in that
- the reflection properties of the hologram as a retro-reflector are respectively actively influenced for the surface (4) to be sensed by filtering out the necessary reflection regions or by computer-aided generation.

7. Optical arrangement according to one of the preceding claims, characterised in that
- a form comparison between a defect-free comparison object and the surface (4) to be sensed is carried out, by illuminating both objects, the light reflected from the retro-reflector being faded out by means of a half-silvered mirror and deflected onto the object to be examined.

8. Optical arrangement according to claim 7, characterised in that
- the defect-free comparison object has a reflecting coating applied to it or is replaced by a hologram produced from it, and is used for the form-adapted illumination of the surface (4) to be sensed.

9. Optical arrangement according to one of the preceding claims, characterised in that
- the light source (1) is composed of individual light sources of differing colour and the video camera (6) is a colour video camera.

## Revendications

1. Dispositif optique pour déterminer une forme tridimensionnelle dans la structure d'un objet à examiner, dans lequel
- l'objet est éclairé sous un angle prédéterminé, par une source de lumière (1),
- il est prévu une caméra vidéo (6), en aval de laquelle est branché un dispositif d'évaluation électronique, au moyen duquel les rayons lumineux (2) de la source de lumière (1), influencés par l'objet, peuvent être détectés et évalués,
- entre la caméra vidéo (6) et l'objet est disposé un miroir semi-transparent (3), qui réfléchit les rayons lumineux (2) de la source de lumière (1) en direction de l'objet et qui transmet les rayons lumineux (2) provenant de l'objet, en direction de la caméra vidéo (6),
- il est prévu un dispositif de rétroréflexion (5), qui est disposé dans le trajet du rayonnement des rayons lumineux (2) de telle sorte que
- lors de l'examen d'une surface réfléchissante (4) de l'objet, les rayons lumineux (2) de la source de lumière (1) sont réfléchis par la surface (4) en direction du dispositif de rétroréflexion (5) et sont réflechis par ce dernier en étant renvoyés vers la surface et, à partir de là, en direction de la caméra vidéo (6),
caractérisé par le fait que
- dans le trajet des rayons lumineux (2) respectivement une lentille de champ (100) est disposée entre la source de lumière (1) et la surface réfléchissante (4), et une lentille de champ (11) est disposée entre la surface réfléchissante (4) et le dispositif de rétroréflexion (5) de telle sorte qu'un déplacement parallèle des rayons lumineux (2) est réglé au voisinage de la surface (4),
- un système condenseur optique (12) et un système optique de projection (12,14) sont montées en aval de la source de lumière (1), et
- un récepteur de lumière (15) est disposé sur le côté du miroir semi-transparent (3), qui est situé à l'opposé de la source de lumière (1).

2. Dispositif optique pour la détection de formes tridimensionnelles dans la structure d'un objet à examiner, dans lequel
- l'objet est éclairé sous un angle prédéterminé, par une source de lumière (1),
- il est prévu une caméra vidéo (6), en aval de laquelle est monté un dispositif d'évaluation électronique, au moyen duquel les rayons lumineux (2) de la source de lumière (1), influencés par l'objet, peuvent être détectés et évalués,
- entre la caméra vidéo (6) et l'objet est disposé un miroir semi-transparent (3), qui réfléchit les rayons lumineux (2) de la source de lumière (1) en direction de l'objet et transmet les rayons lumineux (2) provenant de l'objet, en direction de la caméra vidéo (6),
- il est prévu un dispositif de rétroréflexion (5), qui est disposé dans le trajet du rayonnement des rayons lumineux (2) de telle sorte que
- lors de l'examen d'un objet transparent (16), les rayons lumineux (2) traversent l'objet (16) en direction du dispositif de rétroréflexion (5) et sont renvoyés par ce dernier, à travers l'objet (16), en direction de la caméra vidéo (6),
caractérisé par le fait que
- dans le trajet des rayons lumineux (2), respectivement une lentille de champ (10) est disposée entre la source de lumière (1) et l'objet (16), et une lentille de champ (11) est disposée entre l'objet (16) et le dispositif de rétroréflexion (5) de telle sorte qu'un déplacement parallèle des rayons lumineux (2) est réglé au voisinage de l'objet (16),
- un système condenseur optique (12) et un système optique de projection (12,14) sont montés en aval de la source de lumière (1), et
- un récepteur de lumière (15) est disposé sur le côté du miroir semi-transparent (3), qui est situé à l'opposé de la source de lumière (1).

3. Dispositif optique suivant la revendication 1 ou 2, caractérisé par le fait que
- un objectif servant à modifier le contraste par déplacement du dispositif de rétroréflexion (5) est disposé devant ce dispositif de rétroréflexion.

4. Dispositif optique suivant l'une des revendications précédentes, caractérisé par le fait que
- le dispositif de rétroréflexion (5) est un hologramme possédant des caractéristiques définies de réflexion.

5. Dispositif optique suivant la revendication 4, caractérisé par le fait que
- la source de lumière (1) est un laser possédant un faisceau de lumière élargi.

6. Dispositif optique suivant la revendication 4 ou 5, caractérisé par le fait que
- les caractéristiques de réflexion de l'hologramme en tant que dispositif de rétroréflexion (5) sont influencées respectivement de façon active pour la surface (4) devant être détectée, par séparation par filtrage des zones réfléchissantes requises ou par génération assistée par ordinateur.

7. Dispositif optique suivant l'une des revendications précédentes, caractérisé par le fait que
- une comparaison est réalisée entre la forme d'un objet de référence sans défaut et la forme de la surface (4) à détecter, par éclairage des deux objets et par séparation de la lumière renvoyée par le dispositif de rétroréflexion (5), par l'intermédiaire d'un miroir semi-transparent et envoi sur l'objet à contrôler.

8. Dispositif optique suivant la revendication 7, caractérisé par le fait que
- l'objet de référence sans défaut est métallisé ou est remplacé par un hologramme fabriqué à partir de cet objet et est utilisé pour l'éclairement, adapté à la forme, de la surface (4) à détecter.

9. Dispositif optique suivant l'une des revendications précédentes, caractérisé par le fait que
- la source de lumière (1) est constituée par des sources de lumière individuelles possédant des couleurs différentes et que la caméra vidéo (6) est une caméra vidéo en couleurs.
